# EUROPÄISCHE PATENTSCHRIFT

(11) **EP 0 713 985 B1**
(45) Veröffentlichungstag und Bekanntmachung des Hinweises auf die Patenterteilung: **28.10.1998**
(21) Anmeldenummer: 95114925.1
(22) Anmeldetag: 22.09.1995
(51) Int. Cl.: F16H 61/02, F16H 61/00

(54) **Steuereinrichtung und Steuerverfahren für ein stufenloses Getriebe**
Control device and method for a continuously variable transmission
Dispositif et méthode de commande d'une transmission à variation continue

(30) Priorität: 24.11.1994 DE 4441878
(43) Veröffentlichungstag der Anmeldung: 29.05.1996
(73) Patentinhaber: Dr.Ing.h.c. F. Porsche Aktiengesellschaft, 70435 Stuttgart (DE)
(72) Erfinder: Lardy, Patrick, D-71299 Wimsheim (DE); Petersmann, Joseph, D-71263 Weil der Stadt (DE)

(56) Entgegenhaltungen:
- DE-C- 4 120 540
- DE-C- 4 239 133
- US-A- 4 663 990
- US-A- 4 836 056

## Beschreibung

Die Erfindung betrifft eine Steuereinrichtung und ein Steuerverfahren für ein stufenloses Getriebe nach dem Oberbegriff der Patentansprüche 1 und 8.

Bei bekannten gestuften Getrieben müssen im Rahmen der Getriebeauslegung die Übersetzungsprünge festgelegt werden. Übersetzungssprünge bzw. Übersetzungsstufen können immer nur für eine Fahrstituation optimal sein; bei der Getriebeauslegung wird daher von einer mittleren Fahrsituation ausgegangen. Eine so gewonnene Getriebeauslegung kann in abweichenden Fahrsituationen nicht optimal sein, z.B. wenn bergauf oder bergab, beladen oder im Stau gefahren wird. So ist meist die Auslegung des ersten Ganges so gewählt, daß auch an starken Steigungen ein beladenes Fahrzeug noch anfahren kann. Im Stau, bzw. im Stop-and-go-Verkehr jedoch führt dies zu häufigen Schaltvorgängen, da der erste Gang für diese Situation zu kurz ausgelegt ist und die Antriebsmaschine rasch ihre Drehzahlgrenze erreicht.

Aus der DE-A1 41 20 540 ist es für stufenlose Getriebe bekannt, ein gestuftes Getriebe nachzubilden, indem Übersetzungen fest vorgegeben sind. Ferner ist es aus der DE-A1 42 39 133 bekannt, mit Hilfe eines stufenlosen Getriebes ebenfalls unter Vorgabe fester Übersetzungen einen Stufenautomaten nachzubilden. Auch hier treten die oben genannten Probleme auf.

Es ist Aufgabe der Erfindung, eine Anpassung des Anfahrganges bzw. der Anfahrübersetzung an die Fahrsituation "Langsamfahrt" zu erreichen.

Diese Aufgabe wird mit den Merkmalen der unabhängigen Ansprüche gelöst. Dort ist vorgeschlagen, eine Steuereinrichtung für ein stufenloses Getriebe um eine Erkennungseinrichtung für Fahrsituationen, in denen der Übersetzungssprung zu groß ist, zu erweitern und ferner eine Einrichtung zur Anpassung der voreingestellten Übersetzung vorzusehen. Die Erkennungsfunktion aktiviert die Anpaßfunktion, sobald Bedingungen vorliegen, die auf ein Fahren in Langsamfahrt schließen lassen. Die Anpaßeinrichtung verringert dann die Übersetzung ausgehend von der höchsten voreingestellten Übersetzung ab einer vorgegebenen Drehzahl; dies ist in der Regel ein Drehzahlwert, bei dem die Antriebsmaschine ein ausreichendes Antriebsmoment aufgebaut hat.

Hiermit ist die Fahrbarkeit der höchsten voreingestellten Übersetzung deutlich verbessert, und gleichzeitig wird die Schalthäufigkeit verringert, weil die höchsten voreingestellten Übersetzung über einen größeren Geschwindigkeitsbereich nutzbar ist. Da die Erfindung sowohl bei manuell als auch bei automatisch schaltenden Getrieben anwendbar ist, ist erreicht, daß in den erkannten Fahrsituationen eine Anpassung der Übersetzung an die herrschenden Betriebsbedingungen des Fahrzeuges erfolgt, ohne daß hierdurch die typischen Eigenschaften eines gestuften Getriebes verloren gingen.

In den Unteransprüchen sind vorteilhafte Aus- und Weiterbildungen der Erfindung beschrieben.

So wird in Weiterbildung der Erfindung vorgeschlagen, auf Langsamfahrt zu erkennen, wenn sowohl die Stellung eines Leistungssteuerorganes, beispielsweise eines Fahrpedales oder einer Drosselklappe, als auch die Verstellgeschwindigkeit dieses Leistungssteuerorganes unterhalb vorgegebener Grenzen bleiben. Alternativ wird vorgeschlagen zu prüfen, ob sowohl die Fahrgeschwindigkeit als auch die Verstellgeschwindigkeit des Leistungssteuerorganes unter vorgegebenen Grenzwerten bleiben.

Die vorgenannten Weiterbildungen können dadurch erweitert werden, daß zusätzlich ein Anfahrvorgang erkannt werden muß; dies kann beispielsweise dadurch geschehen, daß die für die Weiterbildung aufgeführten Bedingungen unmittelbar nach dem Erkennen eines Fahrzeugstillstandes (Fahrgeschwindigkeit = 0) erfüllt sein müssen, um die erfindungsgemäße Funktion auszulösen. Mit dieser Art der Erkennung von Langsamfahrt wird eine Vielzahl von Fahrsituationen erkannt, denen gemeinsam ist, daß hier über einen längeren Zeitraum in einem niedrigeren Geschwindigkeitsbereich gefahren wird. Dies sind z.B. Stop-and-go Verkehr oder der Lieferverkehr von Haus zu Haus.

Zur Anpassung der höchsten voreingestellten Übersetzung wird in Weiterbildung der Erfindung ferner vorgeschlagen, ausgehend von der höchsten voreingestellten Übersetzung die Übersetzung so zu wählen, daß die Eingangsdrehzahl des Getriebes (bzw. die Drehzahl der Antriebsmaschine) konstant bleibt. Diese Verstellung der Übersetzung wird vorgenommen, sobald die Eingangsdrehzahl des Getriebes eine Mindestdrehzahl erreicht hat, wobei der Wert dieser Mindestdrehzahl abhängig von der Drosselklappenstellung gewählt ist, um so ein der Drosselklappenstellung entsprechendes Eingangsdrehzahlniveau und damit auch Motorleistungsniveau einzustellen. Die Verstellung der Übersetzung endet, wenn die Übersetzung einen vorgegebenen unteren Grenzwert erreicht hat.

In einer alternativen Ausbildung erfolgt die Anpassung der Übersetzung nach einer vorgegebenen Funktion, abhängig von der Eingangsdrehzahl des Getriebes bzw. der Fahrgeschwindigkeit des Fahrzeuges. Auch hier beginnt die Verstellung, sobald die Eingangsdrehzahl einen vorgegebenen Wert erreicht hat. Dieser Wert der Eingangsdrehzahl muß nicht festgelegt sein, sondern kann den Betriebsbedingungen angepaßt werden. Die Verstellung wird wiederum beendet, wenn ein Grenzwert für die Übersetzung erreicht ist. Vorteilhafterweise ist die Funktion zum Einstellen der Übersetzung so gewählt, daß mit dem Erreichen des Grenzwertes für die Übersetzung auch gleichzeitig ein Grenzwert für die Eingangsdrehzahl erreicht ist. Dieser Grenzwert für die Eingangsdrehzahl wird vorteilhafterweise etwas unterhalb der Eingangsdrehzahl gewählt, bei der selbsttätig ein Übersetzungswechsel ausgelöst wird, um so zu verhindern, daß das Ende der Übersetzungseinstellung und der Wechsel der Übersetzung aufeinanderfallen.

Der untere Grenzwert, bei dem die Verstellung der Übersetzung endet, ist vorteilhafterweise so gewählt, daß ein bestimmter Anteil des Übersetzungssprunges zur nächstkleineren voreingestellten Übersetzung als Abstand zu dieser Übersetzung erhalten bleibt. Dadurch bleibt sichergestellt, daß bei einem Wechsel zur nächst längeren voreingestellten Übersetzung noch ein Übersetzungssprung stattfindet und damit der Charakter eines gestuften Getriebes erhalten bleibt.

Die Erfindung sowie ihre Weiterbildungen sind in der Regel in Form eines Programmes mit Hilfe einer mikroprozessorgesteuerten, programmierbaren Steuereinrichtung ausgeführt. Selbstverständlich ist es auch möglich die Erfindung sowie ihre Weiterbildungen durch bekannte diskrete Schaltungen, wie z.B. Differentialverstärker, zu realisieren. Somit betrifft die Erfindung einen Funktionsumfang, der sowohl in Form einer Steuereinrichtung wie auch eines Steuerverfahrens realisiert werden kann, und die dargestellten Wirkungen und Vorteile gelten in gleicher Weise für die Ausführung als Steuereinrichtung und die Ausführung als Steuerverfahrten.

Die vorbeschriebenen Wirkungen und Vorteile beziehen sich sowohl auf eine manuell geschaltete als auch auf eine automatisch geschaltete Nachbildung eines gestuften Getriebes mit Hilfe eines stufenlosen Getriebes.

Die Erfindung ist nachstehend anhand des in den Zeichnungen beschriebenen Ausführungsbeispieles beschrieben. Es zeigen:
- Fig. 1: eine Übersicht über ein stufenloses Getriebe mit einer Steuerung
- Fig. 2: ein schematisches Blockschaltbild einer Ubersetzungssteuerung,
- Fig. 3: eine Übersicht über in der Übersetzungssteuerung enthaltene Funktionen,
- Fig. 4: ein Diagramm des zeitlichen Verlaufes der Drehzahl einer Antriebsmaschine und der eingestellten Übersetzung während des Wirkens der erfindungsgemäßen Steuereinrichtung nach einer ersten Ausführung,
- Fig. 5: ein Diagramm des zeitlichen Verlaufes der Drehzahl einer Antriebsmaschine und der eingestellten Übersetzung während des Wirkens der erfindungsgemäßen Steuereinrichtung nach einer zweiten Ausführung,
- Fig. 6: ein Ablaufdiagramm einer Erkennungsunktion und
- Fig. 7: ein Ablaufdiagramm einer Anpaßfunktion.

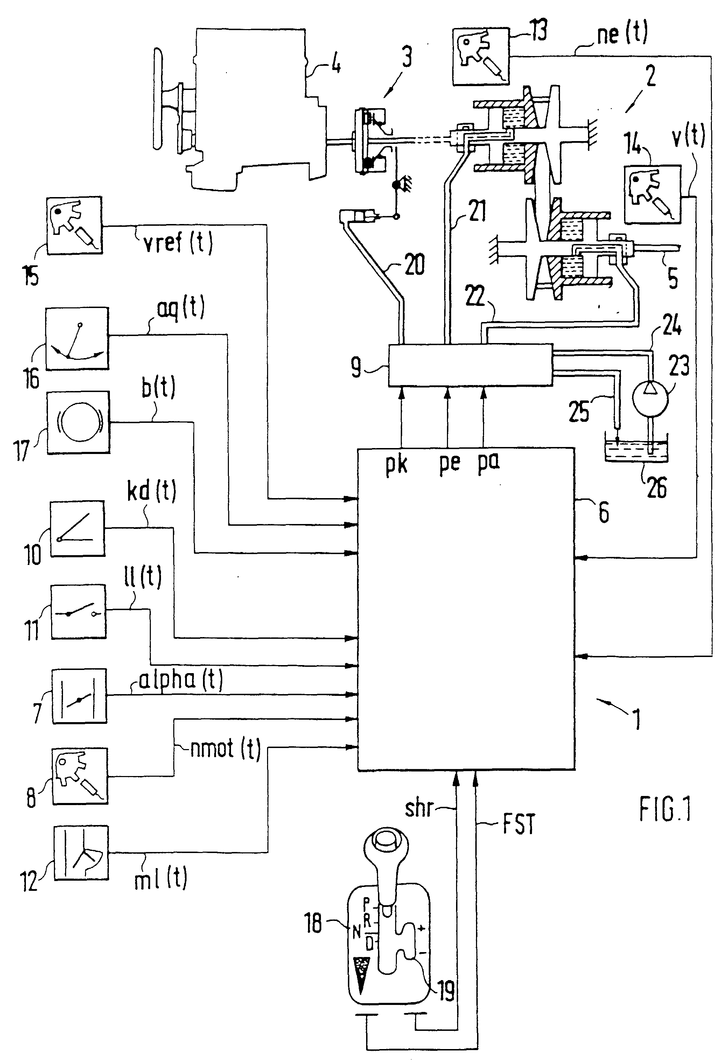

**Fig. 1** zeigt eine Übersicht über ein elektro-hydraulisch betätigten stufenlosen Getriebes 2 mit einer Steuerung 1 am Beispiel eines Umschlingungsgetriebes. Das stufenlose Getriebe 2 wird über eine steuerbare Anfahrkupplung 3 von einer Brennkraftmaschine 4 angetrieben. Eine Abtriebswelle 5 des stufenlosen Getriebes 2 ist mit einem nicht gezeigten Radantrieb eines Kraftfahrzeugs verbunden.

Größen oder Funktionen, die sich mit der Zeit t ändern, sind nachfolgend als Funktionen f(t) der Zeit t dargestellt.

Ein Steuergerät 6 steuert wenigstens in Abhängigkeit von der Drosselklappenstellung alpha(t) eines Drosselklappenwinkelgebers 7 und einer Motordrehzahl nmot(t) eines Motordrehzahlgebers 8 der Brennkraftmaschine 4 einen Hydraulik-Ventilblock 9 an. Zur Steuerung des stufenlosen Getriebes 2 und der Anfahrkupplung 3 erhält das Steuergerät 6 als weitere Eingangsgrößen ein Kick-down-Signal kd(t) eines Kick-down-Schalters 10, ein Leerlaufsignal II(t) eines Leerlaufschalters 11, eine Luftmenge bzw. Luftmasse ml(t) eines Luftmengen- bzw. Luftmassengebers 12 der Brennkraftmaschine 4 sowie eine Getriebeeingangsdrehzahl ne(t) eines Getriebeeingangsdrehzahlgebers 13 und eine Fahrgeschwindigkeit v(t) eines Fahrgeschwindigkeitgebers 14. Die Getriebeeingangsdrehzahl ne(t) entspricht bei geschlossener Anfahrkupplung der Motordrehzahl nmot(t) und kann dann an deren Stelle verwendet werden. Zusätzlich wird vom Steuergerät 6 eine Geschwindigkeit vref(t) eines Referenzgeschwindigkeitgebers 15 an einer nicht angetriebenen Fahrzeugachse, eine Querbeschleunigung aq(t) eines Querbeschleunigungsgebers 16 und ein Bremssignal b(t) eines Bremssignalgebers 17 erfasst und verarbeitet.

Schließlich ist die Steuerung üblicherweise vom Fahrzeugführer über eine Wähleinrichtung 18 zur Vorwahl von Fahrstufen P (Parksperre), R (Rückwärtsgangstufe), N (Leergangsstufe) und D (selbstätige Einstellung der Übersetzung des stufenlosen Getriebes) beeinflußbar; ferner ist ein Einstellbereich der Wähleinrichtung 18 zur direkten Vorgabe der Übersetzung vorgesehen.

Die Wähleinrichtung 18 kann aus der Fahrstufe D in eine zweite Schaltgasse 19 bewegt werden, in der die Wähleinrichtung 18 ausgehend von einer mittigen Ruheposition als Wippschalter arbeitet und der Fahrzeugführer die Übersetzung im Sinne einer Hochschaltung oder einer Rückschaltung beeinflussen kann. Die Wähleinrichtung 18 gibt ein Fahrstufensignal FST und ein Schaltanforderungssignal shr für eine Hochschaltung oder eine Rückschaltung ab.

Hier und im folgenden steht der Begriff "Hochschalten" oder "Verringern der Übersetzung" für eine Übersetzungsänderung, die bei gleichbleibender Eingangsdrehzahl die Ausgangsdrehzahl des Getriebes erhöht, entsprechend einer Hochschaltung bei einem Stufengetriebe. Umgekehrt stehen die Begriffe "Rückschalten" und "Erhöhen der Übersetzung" für eine Übersetzungsänderung im Sinne einer Verringerung der Ausgangsdrehzahl des Getriebes bei gleichbleibender Eingangsdrehzahl, entsprechend einer Rückschaltung bei einem Stufengetriebe.

In Abhängigkeit von den genannten Größen steuert das Steuergerät 6 über einen Signalausgang pk und den Hydraulik-Ventilblock 9 den Hydraulikdruck in der Anfahrkupplung 3 sowie über Signalausgänge pe und pa und den Hydraulik-Ventilblock 9 eine Ist-Übersetzung ue zwischen der Getriebeeingangsdrehzahl ne(t) und der Getriebeausgangsdrehzahl (Fahrgeschwindigkeit) v(t) an. Der Hydraulik-Ventilblock 9 verbindet hierzu entsprechende Steuerleitungen 20, 21 und 22 der Anfahrkupplung 3 und des stufenlosen Getriebes 2 mit einer an eine Pumpe 23 angeschlossenen Druckleitung 24 oder einer Rücklaufleitung 25 zu einem Vorratsbehälter 26 für Hydraulikflüssigkeit.

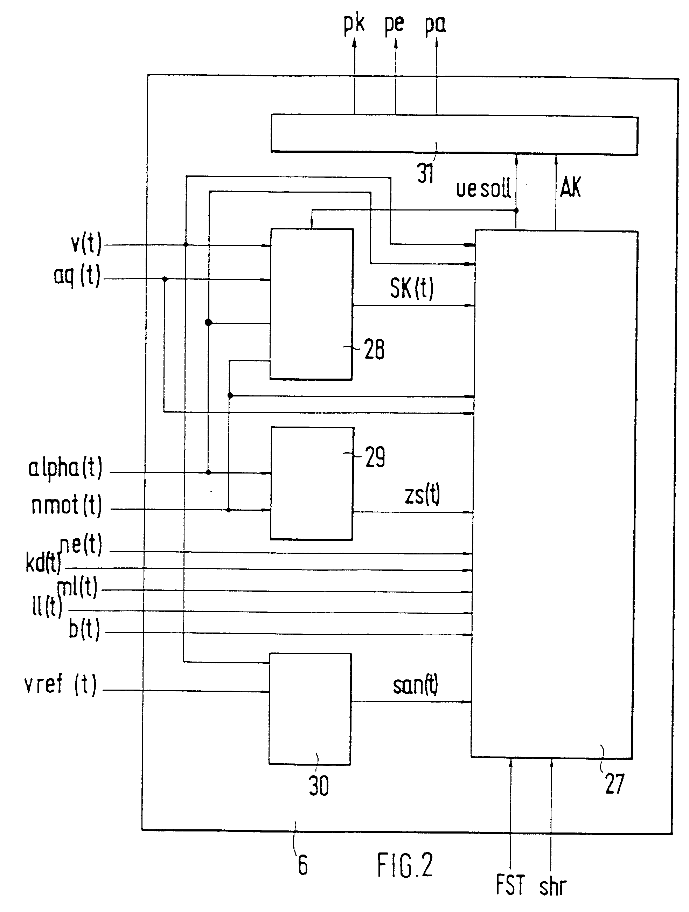

Das Steuergerät 6 umfaßt wie in **Fig. 2** dargestellt eine Übersetzungssteuerung 27, die mit einer Fahraktivitätsermittlungfunktion 28, einer Zug-Schub-Ermittlungsfunktion 29, einer Antriebsschlupfermittlungsfunktion 30 und einer Stellfunktion 31 verbunden ist.

Die Fahraktivitätsermittlungsfunktion 28 bestimmt eine den Fahrstil des Fahrers oder dessen verkehrssituationsbedingtes Handeln im Bezug auf die Steuerung des Kraftfahrzeuges bewertenden Größe Fahraktivität SK(t), vorzugsweise nach einem in der DE-A1 39 22 051 beschriebenen Verfahren.

Die Zug-Schub-Ermittlungsfunktion 29 gibt in Abhängigkeit von der Drosselklappenstellung alpha(t) und der Motordrehzahl nmot(t) ein Signal für Zug- oder Schubbetrieb des Fahrzeuges Zug/Schub zs(t) ab und die Antriebsschlupfermittlungsfunktion 30 ermittelt aus der Differenz von Fahrgeschwindigkeit v(t) und Geschwindigkeit vref(t) einen den Schlupf der angetriebenen Räder repräsentierenden Antriebsschlupf san(t).

Aus diesen Größen, dem Fahrstufensignal FST, dem Schaltanforderungssignal shr, der Drosselklappenstellung alpha(t), dem Kick-down-Signal kd(t), dem Leerlaufsignal II(t), der Luftmasse ml(t), der Getriebeeingangsdrehzahl ne(t), der Fahrgeschwindigkeit v(t), der Querbeschleunigung aq(t), dem Bremssignal b(t) und der Getriebeausgangsdrehzahl ne(t) ermittelt die Übersetzungssteuerung 27 eine Soll-Übersetzung uesoll sowie ein Signal Anfahrkupplung auf/zu AK, die an die Stellfunktion 31 weitergegeben werden.

Die Stellfunktion 31 steuert mittels der Signalausgänge pe und pa die Einstellung der Ist-Übersetzung ue des Getriebes 2, wobei die Soll-Übersetzung uesoll mit geringstmöglicher Verzugszeit, jedoch ohne merkliches Überschwingen eingestellt wird. Darüber hinaus wird die Anfahrkupplung nach Maßgabe des Signales Anfahrkupplung auf/zu AK von der Stellfunktion 31 über den Signalausgang pk gesteuert.

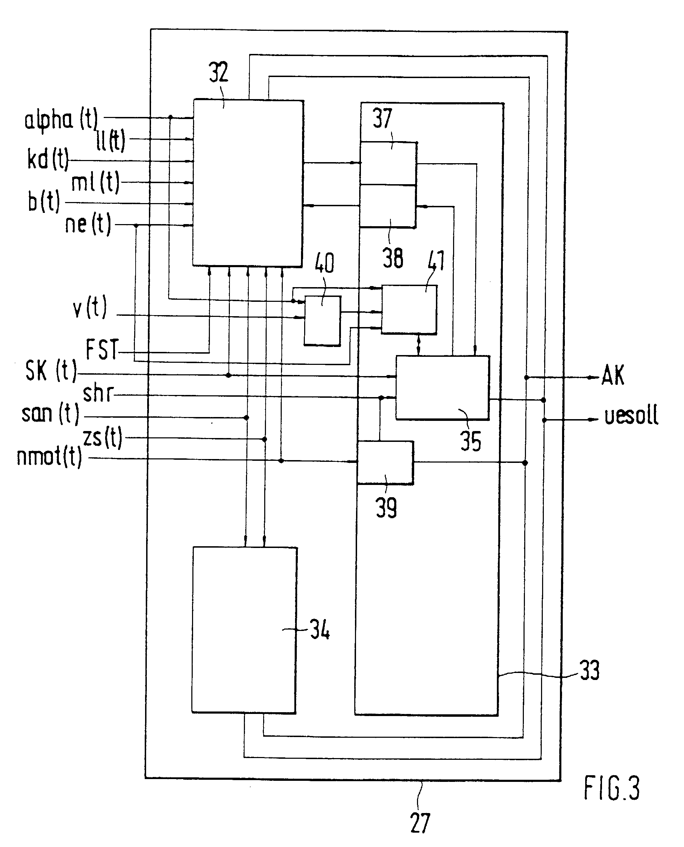

In **Fig. 3** ist eine Übersicht über die in der Übersetzungssteuerung 27 enthaltenen Funktionen dargestellt. Für die erste selbsttätig die Übersetzung wählende Betriebsart ist eine Automatikfunktion 32 mit den Eingangsgrößen Zug/Schub zs(t), Antriebsschlupf san(t), Fahrstufensignal FST, Fahraktivität SK(t), Drosselklappenstellung alpha(t), Motordrehzahl nmot(t), Leerlaufsignal II(t), Kick-Down-Signal kd(t), Luftmassensignal ml(t), Bremssignal b(t) und Getriebeeingangsdrehzahl ne(t) vorgesehen.

Für die zweite vom Fahrer beeinflußte Betriebsart gibt es eine Manuellfunktion 33 mit den Eingangsgrößen Schaltanforderungssignal shr, Fahraktivität SK(t) und Motordrehzahl nmot(t). Weiterhin umfaßt die Übersetzungssteuerung 27 eine Fahrsicherheitsfunktion 34 mit den Eingangsgrößen Zug/Schub zs(t) und Antriebsschlupf san(t). Die genannten Funktionen erzeugen jeweils die Ausgangssignale Soll-Übersetzung uesoll und Anfahrkupplung auf/zu AK.

Innerhalb der Manuellfunktion 33 ermittelt eine Grundfunktion 35 aus der Fahraktivität SK(t) und dem Schaltanforderungssignal shr ein Zwischensignal einer Soll-Übersetzung uesoll_z. An die Grundfunktion 35 sind eine erste Übergangsfunktion 37 und eine zweite Übergangsfunktion 38 angegliedert, die beide jeweils mit der Automatikfunktion 32 verbunden sind. Parallel zur Grundfunktion 35 ist eine Sicherheitsfunktion 39 mit der Motordrehzahl nmot(t) beaufschlagt und gibt das Schaltanforderungssignal shr sowie das Signal Anfahrkupplung auf/zu AK ab.

Die Grundfunktion 35 enthält eine nicht gezeigte Tabelle, in der voreingestellte Soll-Übersetzungen uesoll_i abgelegt sind. Da jede dieser voreingestellten Soll-Übersetzungen uesoll_i bei der Nachbildung eines Stufengetriebes einem Gang dieses Stufengetriebes entspricht, sind so viele voreingestellten Soll-Übersetzungen uesoll_i vorgesehen, wie Gänge eines Stufengetriebes nachgebildet werden sollen. Die voreingestellten Soll-Übersetzungen uesoll_i können daher auch als Gänge bezeichnet werden.

Im dargestellten Beispiel ist ein 5gängiges Stufengetriebe nachgebildet, so daß für Vorwärtsfahrt die voreingestellten Soll-Übersetzungen uesoll_1, uesoll_2, uesoll_3, uesoll_4 und uesoll_5 in der Tabelle abgelegt sind. Die Bezeichnung der voreingestellten Soll-Übersetzungen erfolgt nach dem Schema uesoll_i, wobei i für den entsprechenden Gang des Stufengetriebes steht. uesoll_3 steht also für die voreingestellte Soll-Übersetzung, die dem 3. Gang des Stufengetriebes entspricht. Während die Gänge von uesoll_1 nach uesoll_5 'höher' werden, verringert sich in dieser Richtung der Wert der voreingestellten Soll-Übersetzung: die voreingestellte Soll-Übersetzung ist bei uesoll_1 am höchsten und bei uesoll_5 am niedrigsten.

Schließlich ist eine Anpaßfunktion 41 für die Soll-Übersetzung uesoll vorgesehen, die bei durch eine Erkennungsfunktion 40 erkannten Fahrsituationen aus den in der Grundfunktion 35 voreingestellt abgelegten Soll-Übersetzungen uesoll_i die aktuell gewählte vorgeingstellte Soll-Übersetzung uesoll_i verändert und als veränderte Soll-Übersetzung uesoll_v weitergibt.

Die erste Übergangsfunktion 37 wird bei einem Wechsel von der Automatikfunktion 32 zur Manuellfunktion 33, d.h. einem Wechsel aus der ersten selbsttätig die Übersetzung wählenden zur zweiten vom Fahrer beeinflußten Betriebsart, aufgerufen und regelt den Übergang. Umgekehrt regelt die zweite Übergangsfunktion den Übergang von der Manuellfunktion 33 zur Automatikfunktion 32.

Die Erkennungsfunktion 40 hat die Aufgabe, die Fahrsituation "Langsamfahrt" zu erkennen. Hiermit sind alle Fahrsituationen gemeint, die über einen längeren Zeitraum mit geringer Geschwindigkeit gefahren wird, beispielsweise Stop-and-Go Verkehr oder der Lieferverkehr von Haus zu Haus. Um Langsamfahrt zu erkennen, prüft die Erkennungsfunktion 40, ob ein Anfahrvorgang vorliegt, indem sie wartet, bis die Fahrgeschwindigkeit v(t) den Wert Null erreicht. Ist dies der Fall, so wird im weiteren geprüft, ob die Drosselklappenstellung alpha(t) und die hieraus gebildete Drosselklappengeschwindigkeit dalpha(t)/dt unterhalb der vorgegebenen Grenzwerte G1 und G2 liegen. Im Ausführungsbeispiel liegt der Grenzwert G1 zu der Drosselklappenstellung alpha(t) bei 50 % und der Grenzwert G2 für die Drosselklappengeschwindigkeit dalpha(t)/dt bei 100 %/sec. Demnach erkennt die Erkennungsfunktion 40 die Fahrsituation "Langsamfahrt", wenn der Fahrer nach einem Stillstand des Fahrzeuges wenig und vergleichsweise langsam Gas gibt.

Eine Verletzung einer der beiden Bedingungen führt zum Abbruch der Erkennung "Langsamfahrt" und es ist erneut die Erkennung eines Anfahrvorganges erforderlich, um erneut die Fahrsituation "Langsamfahrt" erkennen zu können. Um an dieser Stelle einen allzu raschen Abbruch zu verhindern, ist die Drosselklappenstellung alpha(t) eingangs der Erkennungsfunktion 40 tiefpassgefiltert bzw. muß die Verletzung einer der Bedingungen über einen vorgegebenen Zeitraum vorliegen. Bei dem Grenzwert G2 ist zu beachten, daß es sich hier um einen positiven Grenzwert handelt, d.h. die Rücknahme der Drosselklappenstellung alpha(t) kann mit beliebig hoher Geschwindigkeit erfolgen.

Zusätzlich prüft die Erkennungsfunktion 40, ob die Drosselklappenstellung alpha(t) einen unteren Grenzwert G3 unterschreitet. Dieser Grenzwert ist, im Ausführungsbeispiel mit 10%, so gewählt, daß er in der Nähe der Leerlaufstellung liegt und eine Rücknahme der Drosselklappenstellung alpha(t) bis nahezu in die Leerlaufstellung anzeigt. Sind alle vorgenannten Bedingungen erfüllt, so aktiviert die Erkennungsfunktion 40 mit einem Ausgangssignal die Anpaßfunktion 41. Liegt die Drosselklappenstellung alpha(t) unterhalb des Grenzwertes G3, so wird auch bei erkannter Fahrsituation "Langsamfahrt" kein Ausgangssignal abgegeben und damit die Aktivierung der Anpaßfunktion 41 unterbrochen. Wird einer der beiden Grenzwerte G1 und G2 überschritten, so wird erkannt, daß die Fahrsituation "Langsamfahrt" nicht mehr vorliegt und die Aktivierung der Anpaßfunktion 41 wird abgebrochen.

Die Anpaßfunktion 41 bestimmt, sofern sie aktiviert ist, mit Hilfe der aktuellen Drosselklappenstellung alpha(t) eine Solleingangsdrehzahl nesoll. Nachfolgend wird die veränderte Soll-Übersetzung uesoll_v ausgehend von der eingestellten höchsten Übersetzung uesoll_1, entsprechend dem Anfahrgang, so gebildet, daß sich eingangs des Getriebes die Solleingangsdrehzahl nesoll einstellt. Die veränderte Soll-Übersetzung uesoll_v wird hierbei höchstens bis zu einem Wert verringert, der um einen vorgegebenen Betrag oberhalb der nächstgeringeren, voreingestellten Soll-Übersetzung uesoll_2 liegt. Dieser Betrag wird als prozentualer Anteil des Übersetzungssprunges von der voreingestellten Übersetzung uesoll_1 zur voreingestellten Übersetzung uesoll_2 ermittelt.

Bei Deaktivierung der Anpaßfunktion 41 wird eine bereits eingestellte veränderte Soll-Übersetzung uesoll_v beibehalten. Ein Schaltanforderungssignal shr bricht in jedem Fall die Arbeit der Erkennungsfunktion 40 ab und führt damit zur Deaktivierung auch der Anpaßfunktion 41. Bei einem Schaltanforderungssignal shr "Rückschalten" erfolgt unter der Bedingung, daß bereits eine veränderte Soll-Übersetzung uesoll_v eingestellt ist, ein Übergang zur ursprünglich gewählten Soll-Übersetzung uesoll_i.

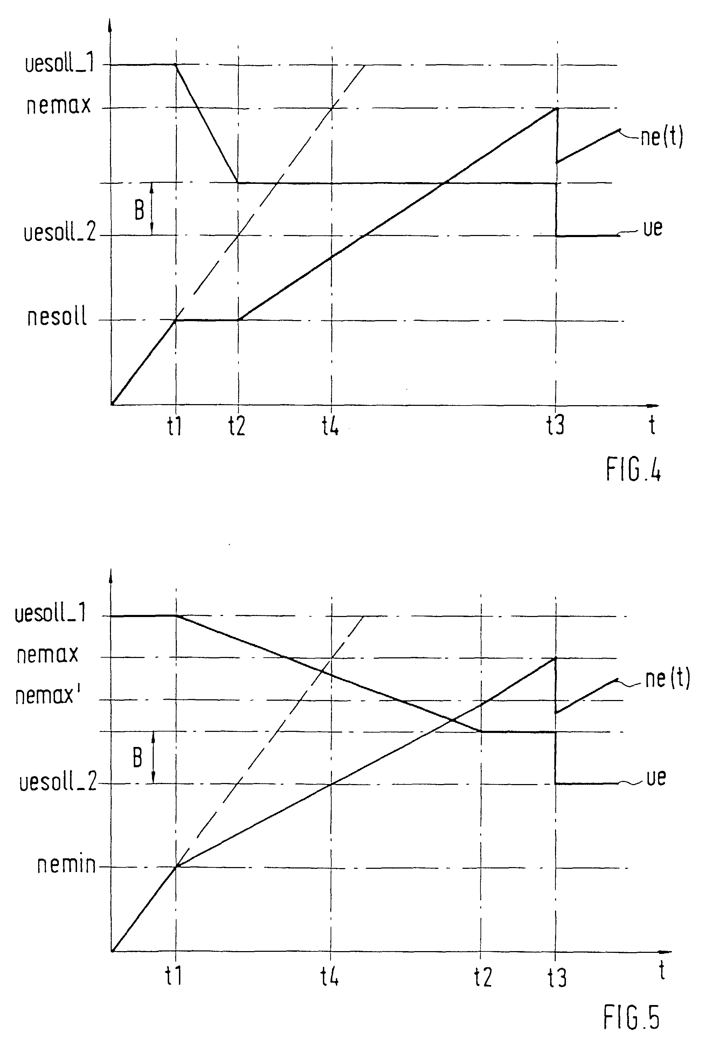

**Fig. 4** zeigt in einem Diagramm den zeitlichen Verlauf der am Getriebe eingestellten Übersetzung ue und der Eingangsdrehzahl ne für eine ständig ansteigende Fahrgeschwindigkeit v(t). Vorausgesetzt ist, daß die Anpaßfunktion 41 aktiviert ist. Zunächst wird die Übersetzung ue auf dem Wert der Anfahrübersetzung uesoll_1 konstant gehalten und die Eingangsdrehzahl ne steigt bis zu dem aus der Drosselklappenstellung alpha(t) bestimmten Wert der Solleingangsdrehzahl nesoll an. Zum Zeitpunkt t1 erreicht die Eingangsdrehzahl ne die Solleingangsdrehzahl nesoll und die Anpaßfunktion 41 verändert die Übersetzung ue in Richtung der zweiten voreingestellten Übersetzung uesoll_2 in der Weise, daß im weiteren die Eingangsdrehzahl ne auf dem Wert der Solleingangsdrehzahl nesoll bleibt. Zum Zeitpunkt t2 erreicht die Übersetzung ue ihren unteren Grenzwert, der einen vorgegebenen Mindestabstand zum nächstgeringeren voreingestellten Übersetzung uesoll_2 darstellt. Hier beendet die Anpaßfunktion 41 die Veränderung der Übersetzung ue, hält diese im weiteren konstant und die Eingangsdrehzahl steigt an. Zum Zeitpunkt t3 erreicht die Eingangsdrehzahl ne einen Eingangsdrehzahlhöchstwert nemax und die Sicherheitfunktion 39 erzwingt einen Wechsel zur nächstgeringeren voreingestellten Übersetzung uesoll_v, sofern nicht zuvor der Fahrer bereits durch ein Schaltanforderungssignal shr eine Hochschaltung eingeleitet hat.

Wenn die Anpaßfunktion 41 nicht aktiviert ist, so wird die erste voreingestellte Soll-Übersetzung uesoll1 am Getriebe 2 konstant eingestellt, die Eingangsdrehzahl ne steigt kontinuierlich an (gestrichelte Linie) und erreicht zum Zeitpunkt t4 ihren Höchstwert nemax, so daß hier die Sicherheitsfunktion 39 eine Hochschaltung einleitet. Die Differenz zwischen den Zeitpunkten t3 und t4 ist die Zeit bzw. der Geschwindigkeitsbereich, der bei erkannter Fahrsituation "Langsamfahrt" durch die Anpaßfunktion 41 gewonnen ist.

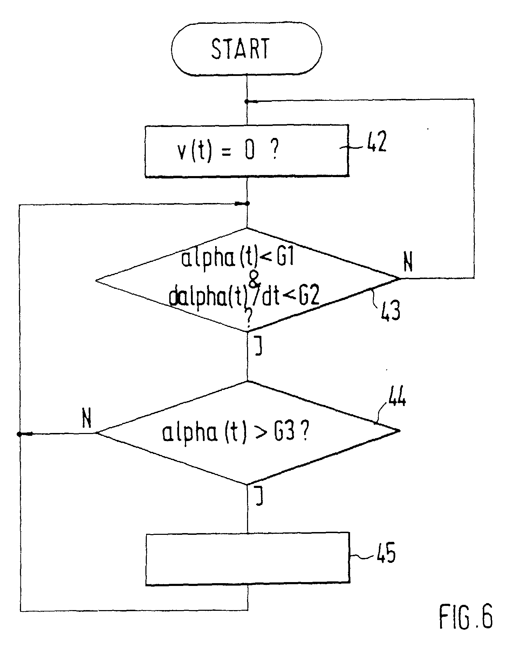

In **Fig. 6** ist in einem Ablaufdiagramm dargestellt, wie die soeben beschriebene Erkennungsfunktion 40 mit Hilfe einer programmierbaren Steuereinrichtung gebildet wird. Eingangs wird in Schritt 42 auf einen Anfahrvorgang gewartet, d.h, gewartet, bis die Fahrgeschwindigkeit v(t) den Wert Null erreicht. In Schritt 43 wird geprüft, ob sowohl die Drosselklappenstellung alpha(t) als auch die hieraus gebildete Drosselklappengeschwindigkeit dalpha(t)/dt unterhalb den ihnen zugeordneten Grenzwerten G1 (50%) und G2 (100%/sec) liegen. Ist mindestens eine der Bedingungen nicht erfüllt, so erfolgt ein Rücksprung vor Schritt 42. Sind hingegeben beide Bedingungen erfüllt, so wird im nächsten Schritt 44 geprüft, ob die Drosselklappenstellung alpha(t) oberhalb des dritten Grenzwertes G3 (10%) liegt. Ist dies der Fall, so wird in Schritt 45 die Anpaßfunktion 41 aktiviert. Führt die Prüfung in Schritt 44 hingegen zu einem negativen Ergebnis, so erfolgt ein Rücksprung vor den Schritt 43 und damit eine Unterbrechung der Aktivierung der Anpaßfunktion 41.

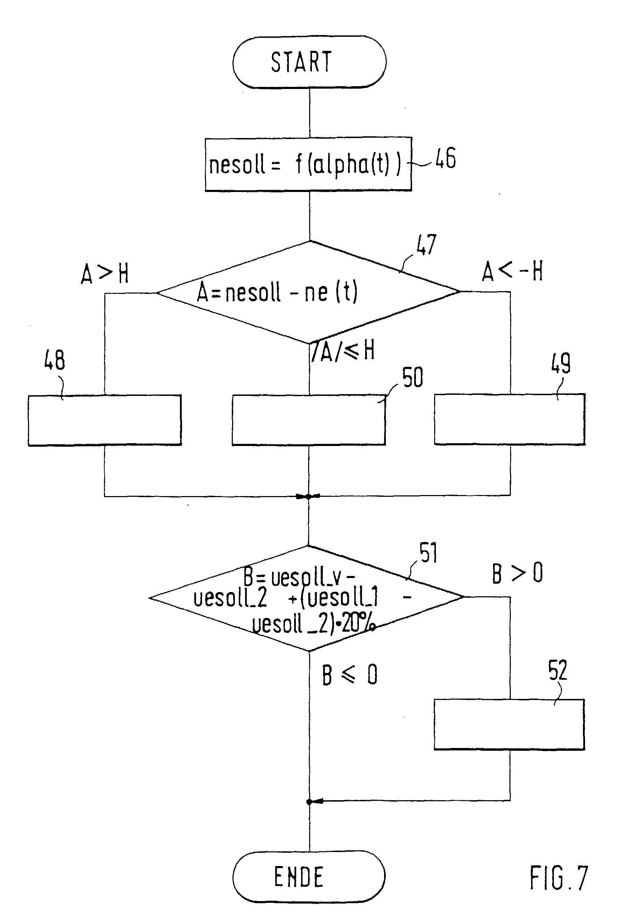

**Fig. 7** zeigt in einem Ablaufdiagramm, wie die Anpaßfunktion 41 mit Hilfe einer programmierbaren Steuereinrichtung gebildet ist. Bei aktivierter Anpaßfunktion 41 wird in Schritt 46 mit Hilfe einer Tabelle aus der Drosselklappenstellung alpha(t) eine Solleingangsdrehzahl nesoll bestimmt. In Schritt 47 wird nachfolgend eine Abweichung A der Eingangsdrehzahl ne von der Solleingangsdrehzahl nesoll gebildet: A = nesoll - ne(t). Ist die Abweichung A größer als eine Hysterese H so wird in Schritt 48 eine veränderte Soll-Übersetzung uesoll_v gebildet, die größer als die aktuell eingestellte Übersetzung ue ist. Ist die Abweichung A hingegen kleiner als der negative Wert der Hysterese H, so wird in Schritt 49 eine veränderte Soll-Übersetzung uesoll_v gebildet, die kleiner als die aktuell eingestellte Übersetzung ue ist. Ist der Betrag der Abweichung A kleiner oder gleich der Hystere H, so wird in Schritt 50 die aktuell eingestellte Übersetzung ue beibehalten. Vor der Einstellung der in den Schritten 48 bis 50 ermittelten veränderten Soll-Übersetzung uesoll_v wird in Schritt 51 der Abstand B der veränderten Soll-Übersetzung uesoll_v zu einem oberhalb der nächstgeringeren voreingestellten Soll-Übersetzung uesoll_2 gebildet, wobei dieser Grenzwert als prozentualer Anteil (hier 20%) des Sprunges von der ersten voreingestellten Soll-Übersetzung uesoll_1 zur zweiten voreingestellten Soll-Übersetzung uesoll_2 bestimmt ist: B = uesoll_v - uesoll_2 + (uesoll_1 - uesoll_2)∗20 % . Wird eine Abweichung B größer Null festgestellt, so wird in Schritt 52 die ermittelte veränderte Soll-Übersetzung uesoll_v an die Stellfunktion 31 ausgegeben. Anderenfalls erfolgt keine Ausgabe und damit auch keine Einstellung veränderten Soll-Übersetzung uesoll_v.

Die Einstellung eines veränderten Übersetzungssollwertes uesoll_v größer als die erste Soll-Übersetzung uesoll_1 wird durch die Stellfunktion 31 unterdrückt. Die in Fig. 6 und 7 dargestellten Abläufe werden jederzeit beendet, wenn ein Schaltanforderungssignal shr erkannt wird.

Die Erkennungsfunktion 40 und die Anpaßfunktion 41 wirken zusammen wie folgt: Sobald ein Anfahrvorgang vorliegt und solange die Bedingungen für die Drosselklappenstellung alpha(t) und die Drosselklappengeschwindigkeit dalpha(t)/dt erfüllt sind, ist die Fahrsituation "Langsamfahrt" erkannt und die Anpaßfunktion 41 wird aktiviert. Die Aktivierung wird unterbrochen, wenn die Drosselklappenstellung alpha(t) unter den unteren Grenzwert G3 fällt und wieder aufgenommen, wenn die Drosselklappenstellung alpha(t) wieder oberhalb dieses Grenzwertes G3 liegt.

Die Anpaßfunktion 41 verändert, wenn sie aktiviert ist, die am Getriebe eingestellte Übersetzung ue in der Weise, daß eine von der Drosselklappenstellung alpha(t) abhängige Solleingangsdrehzahl nesoll möglichst erreicht wird. Die Veränderung der Übersetzung ue ist dabei nach oben durch die größte voreingestellte Soll-Übersetzung uesoll_1 und nach unten durch den vorgegebenen Abstand B zur nächstgeringeren voreingestellten Soll-Übersetzung uesoll_2 begrenzt. Wird eine dieser Grenzen erreicht, so erfolgt im weiteren keine Verstellung der Übersetzung ue.

**Fig. 5** zeigt in einem Diagramm den zeitlichen Verlauf der Übersetzung ue und der Eingangsdrehzahl ne(t) bei ständig steigender Fahrgeschwindigkeit v(t) in einer alternativen Ausführung der Anpaßfunktion 41. Diese unterscheidet sich von der zuvor beschriebenen Anpaßfunktion 41 dadurch, daß zwischen den Zeitpunkten t1 und t2 die Übersetzung ue nicht so eingestellt wird, daß die Eingangsdrehzahl von ne(t) konstant auf dem Wert der Solleingangsdrehzahl nesoll bleibt, sondern die Übersetzung ue wird nach Erreichen einer minimalen Eingangsdrehzahl nemin nach einer vorgegebenen Funktion abhängig von der Eingangsdrehzahl ne(t) eingestellt. Die minimale Eingangsdrehzahl nemin kann hierbei fest in einer Größe gewählt werden, daß die Brennkraftmaschine 4 rund läuft, oder in ähnlicher Form wie die Solleingangsdrehzahl nesoll beim vorstehenden Ausführungsbeispiel von entweder der Getriebeeingangsdrehzahl ne(t) oder der Fahrgeschwindigkeit v(t) abhängig gemacht werden.

Damit ergibt sich zwischen den Zeitpunkten t1 und t2 ein der Fahrgeschwindigkeit v(t) proportionaler Verlauf der Eingangsdrehzahl ne(t). Die Funktion zur Ermittlung der Übersetzung uesoll_v und damit zur Einstellung der Übersetzung ue ist dabei so gewählt, daß mit dem Erreichen des vorgegebenen Abstandes B zur nächstgeringeren voreingestellten Soll-Übersetzung uesoll_2 gleichzeitig ein Grenzwert für die Eingangsdrehzahl nemax' erreicht ist. Dieser Grenzwert für die Eingangsdrehzahl nemax' liegt etwas unterhalb des Höchstwertes für die Eingangsdrehzahl nemax.
¹Supplied by the translator to translate presumed omission in the text.

## Patentansprüche

1. Steuereinrichtung (6) für ein stufenloses Getriebes (2) eines Kraftfahrzeuges, wobei die Steuereinrichtung (6) mit einer Wähleinrichtung (18) versehen ist und die Steuereinrichtung (6) ein gestuftes Getriebe nachbildet, indem die Steuereinrichtung (6) aus einer Gruppe von voreingestellten Übersetzungen (uesoll_i) ausgewählte Übersetzungen (uesoll_i) im Getriebe einstellt, **dadurch gekennzeichnet**, daß die Steuereinrichtung
- eine Erkennungseinrichtung (40) für Langsamfahrt und
- eine Anpaßeinrichtung (41) für die höchste voreingestellte Übersetzung (uesoll_1) aufweist, die die höchste voreingestellte Übersetzung (uesoll_1) nach Erreichen einer vorgegebenen Eingangsdrehzahl (ne(t)) des Getriebes (2) verringert, und
- die Erkennungseinrichtung (40) die Anpaßeinrichtung (41) aktiviert.

2. Steuereinrichtung nach Anspruch 1, **dadurch gekennzeichnet**, daß die Erkennungseinrichtung (40) Langsamfahrt erkennt, wenn die Stellung eines Leistungssteuerorganes (alpha(t)) für eine mit dem Getriebe (2) verbundene Antriebsmaschine (4) unterhalb eines Grenzwertes (G1) liegt und gleichzeitig eine Verstellgeschwindigkeit der Stellung des Leistungssteuerorganes (dalpha(t)/dt) unterhalb eines Grenzwertes (G2) liegt.

3. Steuereinrichtung nach Anspruch 1, **dadurch gekennzeichnet**, daß die Erkennungseinrichtung (40) Langsamfahrt erkennt, wenn die Geschwindigkeit des Fahrzeuges (v(t)) unterhalb eines Grenzwertes liegt und gleichzeitig eine Verstellgeschwindigkeit der Stellung eines Leistungssteuerorganes (dalpha(t)/dt) für eine mit dem Getriebe (2) verbundene Antriebsmaschine (4) unterhalb eines Grenzwertes (G2) liegt.

4. Steuereinrichtung nach Anspruch 2 oder 3, **dadurch gekennzeichnet**, daß die Erkennungseinrichtung (40) zusätzlich prüft, ob ein Anfahrvorgang vorliegt.

5. Steuereinrichtung nach einem der Ansprüche 1 bis 4, **dadurch gekennzeichnet**, daß die Anpaßeinrichtung (41) die voreingestellte Übersetzung (uesoll_1) so ändert, daß die Eingangsdrehzahl (ne(t)) im wesentlichen konstant bleibt, wobei die Veränderung mit dem Erreichen einer vorgegebenen Soll-Eingangsdrehzahl (nesoll) beginnt und bei Erreichen eines vorgegebenen Grenzwertes für die Übersetzung endet.

6. Steuereinrichtung nach einem der Ansprüche 1 bis 4, **dadurch gekennzeichnet**, daß die Anpaßeinrichtung (41) die voreingestellte Übersetzung (uesoll_1) nach einer vorgegebenen Funktion abhängig von der Eingangsdrehzahl (ne(t)) ändert, wobei die Veränderung mit dem Erreichen einer vorgegebenen Eingangsdrehzahl (nemin) beginnt und bei Erreichen eines vorgegebenen Grenzwertes für die Übersetzung endet.

7. Steuereinrichtung nach Anspruch 6, **dadurch gekennzeichnet**, daß die Funktion zur Einstellung der Übersetzung abhängig von der Eingangsdrehzahl (ne(t)) die Eingangsdrehzahl bei Erreichen des vorgegebenen Grenzwertes für die Übersetzung (uesoll1) einen vorgegebenen Grenzwertes (nemax') erreicht.

8. Steuerverfahren für ein stufenloses Getriebe (2) eines insbesondere mit einer Brennkraftmaschine (4) angetriebenen Kraftfahrzeuges, wobei eine das Steuerverfahren ausführende Steuereinrichtung (6) mit einer Wähleinrichtung (18) versehen ist und die Steuereinrichtung (6) ein gestuftes Getriebe nachbildet, indem die Steuereinrichtung (6) aus einer Gruppe von voreingestellten Übersetzungen (uesoll_i) ausgewählte Übersetzungen (uesoll_i) im Getriebe einstellt, **gekennzeichnet** durch folgende Schritte:
- Erkennen einer Fahrsituation für Langsamfahrt, und nachfolgend
- Anpassen der höchsten voreingestellte Übersetzung (uesoll_1) im Sinne einer Veringerung der Übersetzung.

9. Steuerverfahren nach Anspruch 8, **gekennzeichnet** durch folgende Schritte zum Erkennen einer Fahrsituation für Langsamfahrt:
- Prüfen, ob die Stellung eines Leistungssteuerorganes (alpha(t)) für eine mit dem Getriebe (2) verbundene Antriebsmaschine (4) unterhalb eines Grenzwertes (G1) liegt,
- Prüfen, ob eine Verstellgeschwindigkeit der Stellung des Leistungssteuerorganes (dalpha(t)/dt) unterhalb eines Grenzwertes (G2) liegt und
- Erkennen der Fahrsituation für Langsamfahrt, wenn alle Bedingungen gleichzeitig zutreffen.

10. Steuerverfahren nach Anspruch 8, **gekennzeichnet** durch folgende Schritte zum Erkennen einer Fahrsituation für Langsamfahrt:
- Prüfen, ob die Geschwindigkeit des Fahrzeuges (v(t)) unterhalb eines Grenzwertes liegt,
- Prüfen, ob eine Verstellgeschwindigkeit der Stellung des Leistungssteuerorganes (dalpha(t)/dt) unterhalb eines Grenzwertes (G2) liegt und
- Erkennen der Fahrsituation für Langsamfahrt, wenn alle Bedingungen gleichzeitig zutreffen.

11. Steuerverfahren nach Anspruch 9 oder 10, **gekennzeichnet** durch den vorgeschalteten Schritt beim Erkennen einer Fahrsituation für Langsamfahrt:
- Prüfen, ob ein Anfahrvorgang vorliegt.

12. Steuerverfahren nach einem der Ansprüche 8 bis 11, **gekennzeichnet** durch folgende Schritte Anpassen der höchsten voreingestellte Übersetzung (uesoll_1):
- Warten bis die Eingangsdrehzahl (ne(t)) des Getriebes (2) einen vorgegebenen Soll-Wert (nesoll) erreicht hat,
- Einstellen der Übersetzung (uesoll_v) so, daß die Eingangsdrehzahl im wesentlichen konstant bleibt,
- Abbrechen der Einstellung, wenn die Übersetzung (ue) einen vorgegebenen Grenzwert erreicht.

13. Steuerverfahren nach einem der Ansprüche 8 bis 11, **gekennzeichnet** durch folgende Schritte Anpassen der höchsten voreingestellte Übersetzung (uesoll_1):
- Warten bis die Eingangsdrehzahl (ne(t)) des Getriebes (2) einen vorgegebenen kleinsten Wert (nemin) erreicht hat,
- Einstellen einer veränderten Übersetzung (uesoll_v) nach einer vorgegebenen Funktion abhängig von der Eingangsdrehzahl (ne(t)),
- Abbrechen der Einstellung, wenn die Übersetzung (ue) einen vorgegebenen Grenzwert erreicht.

14. Steuerverfahren nach Anspruch 13, **dadurch gekennzeichnet**, daß die Funktion zur Einstellung der veränderten Übersetzung (uesoll_v) abhängig von der Eingangsdrehzahl so gewählt ist, daß die Eingangsdrehzahl (ne(t)) bei Erreichen des vorgegebenen Grenzwertes für die Übersetzung einen vorgegebenen Grenzwert (nemax') erreicht.

## Claims

1. A control means (6) for a continuously variable transmission (2) of a motor vehicle, the control means (6) being provided with a selector means (18) and the control means (6) simulating a multi-stepped transmission by the control means (6) setting gear ratios (uesoll_i) in the transmission selected from a group of preset gear ratios (uesoll_i), characterised in that the control means has
- a recognition means (40) for slow driving and
- an adapting means (41) for the highest preset gear ratio (uesoll_1) which reduces the highest preset gear ratio (uesoll_1) when predetermined input revs (ne(t)) of the transmission (2) have been reached, and
- the recognition means (40) activates the adapting means (41).

2. A control means according to claim 1, characterised in that the recognition means (40) recognizes slow driving when the position of a power control element (alpha(t)) for a driving engine (4) connected to the transmission (2) lies below a limit value (G1) and at the same time an adjusting speed of the position of the power control element (dalpha(t)/dt) lies below a limit value (G2).

3. A control means according to claim 1, characterised in that the recognition means (40) recognizes slow driving when the speed of the vehicle (v(t)) lies below a limit value and at the same time an adjusting speed of the position of a power control element (dalpha(t)/dt) for a driving engine (4) connected to the transmission (2) lies below a limit value (G2).

4. A control means according to claim 2 or 3, characterised in that the recognition means (40) additionally checks whether a starting operation applies.

5. A control means according to one of claims 1 to 4, characterised in that the adapting means (41) changes the preset gear ratio (uesoll_1) such that the input revs (ne(t)) remain substantially constant, the change beginning with the reaching of predetermined reference input revs (nesoll) and ending when a predetermined limit value for the gear ratio is reached.

6. A control means according to one of claims 1 to 4, characterised in that the adapting means (41) changes the preset gear ratio (uesoll_1) according to a predetermined function depending on the input revs (ne(t)), the change beginning with the reaching of predetermined input revs (nemin) and ending when a predetermined limit value for the gear ratio is reached.

7. A control means according to claim 6, characterised in that the function for setting the gear ratio depending on the input revs (ne(t)) [is selected such that]¹ the input revs reach a predetermined limit value (nemax') when the predetermined limit value for the gear ratio (uesoll1) is reached.

8. A control method for a continuously variable transmission (2) of a motor vehicle driven more particularly by an internal combustion engine (4), a control means (6) implementing the control method being provided with a selector means (18) and the control means (6) simulating a multi-stepped transmission by the control means (6) setting gear ratios (uesoll_i) in the transmission selected from a group of preset gear ratios (uesoll_i), characterised by the following steps:
- recognition of a driving situation for slow driving, and then
- adapting of the highest preset gear ratio (uesoll_1) for the purpose of reducing the gear ratio.

9. A control method according to claim 8, characterised by the following steps for recognising a driving situation for slow driving:
- checking whether the position of a power control element (alpha(t)) for a driving engine (4) connected to the transmission (2) lies below a limit value (G1),
- checking whether an adjusting speed of the position of the power control element (dalpha(t)/dt) lies below a limit value (G2) and
- recognition of the driving situation for slow driving, if all conditions simultaneously apply.

10. A control method according to claim 8, characterised by the following steps for recognising a driving situation for slow driving:
- checking whether the speed of the vehicle (v(t)) lies below a limit value,
- checking whether an adjusting speed of the position of the power control element (dalpha(t)/dt) lies below a limit value (G2) and
- recognition of the driving situation for slow driving, if all conditions simultaneously apply.

11. A control method according to claim 9 or 10,
characterised by the preceding step in recognising a driving situation for slow driving:
- checking whether a starting operation applies.

12. A control method according to one of claims 8 to 11, characterised by the following steps [for] adapting the highest preset gear ratio (uesoll_1) :
- waiting until the input revs (ne(t)) of the transmission (2) have reached a predetermined reference value (nesoll),
- setting the gear ratio (uesoll_v) such that the input revs remain substantially constant,
- discontinuing the setting when the gear ratio (ue) reaches a predetermined limit value.

13. A control method according to one of claims 8 to 11, characterised by the following steps [for] adapting the highest preset gear ratio (uesoll_1) :
- waiting until the input revs (ne(t)) of the transmission (2) have reached a predetermined minimum value (nemin),
- setting a changed gear ratio (uesoll_v) according to a predetermined function depending on the input revs (ne(t)),
- discontinuing the setting when the gear ratio (ue) reaches a predetermined limit value.

14. A control method according to claim 13, characterised in that the function for setting the changed gear ratio (uesoll_v) depending on the input revs is selected such that the input revs (ne(t)) reach a predetermined limit value (nemax') when the predetermined limit value for the gear ratio is reached.

## Revendications

1. Dispositif de commande (6) d'une transmission (2) à variation continue d'un véhicule automobile, le dispositif de commande (6) étant pourvu d'un dispositif de sélection (18) et le dispositif de commande (6) simulant une transmission étagée, en ce que le dispositif (6) règle dans la transmission des rapports (uesoll_i) sélectionnés parmi un groupe de rapports (uesoll_i) préréglés, caractérisé en ce que le dispositif de commande
- comporte un dispositif de reconnaissance (40) de marche à basse vitesse et
- un dispositif d'adaptation (41) pour le rapport (uesoll_1) préréglé maximal, qui réduit le rapport (uesoll_1) préréglé maximal, après qu'a été atteinte une vitesse de rotation d'entrée (ne(t)) donnée de la transmission (2) et
- le dispositif de reconnaissance (40) active le dispositif d'adaptation (41).

2. Dispositif de commande selon la revendication 1, caractérisé en ce que le dispositif de reconnaissance (40) reconnaît la marche à basse vitesse, lorsque la position d'un organe de commande de puissance (alpha(t)) pour un moteur d'entraînement (4) relié à la transmission (2), se situe au-dessous d'une valeur limite (Gl) et en même temps une vitesse de réglage de la position de l'organe de commande de puissance (dalpha(t)/dt) se situe au-dessous d'une valeur limite (G2).

3. Dispositif de commande selon la revendication 1, caractérisé en ce que le dispositif de reconnaissance (40) reconnaît la marche à basse vitesse, lorsque la vitesse du véhicule (v(t)) se situe au-dessous d'une valeur limite et en même temps une vitesse de réglage de la position d'un organe de commande de puissance (dalpha(t)/dt) pour un moteur d'entraînement (4) relié à la transmission (2), se situe au-dessous d'une valeur limite (G2).

4. Dispositif de commande selon la revendication 2 ou 3, caractérisé en ce que le dispositif de reconnaissance (40) vérifie en supplément si l'on est en présence d'un démarrage.

5. Dispositif de commande selon l'une des revendications 1 à 4, caractérisé en ce que le dispositif d'adaptation (41) modifie le rapport (uesoll_1) préréglé, de manière que la vitesse de rotation d'entrée (ne(t)) reste sensiblement constante, la variation commençant lorsqu'est atteinte une vitesse de rotation d'entrée de consigne (nesoll) donnée et se terminant lorsqu'est atteinte une valeur limite donnée du rapport.

6. Dispositif de commande selon l'une des revendications 1 à 4, caractérisé en ce que le dispositif d'adaptation (41) modifie le rapport (uesoll_1) préréglé, selon une fonction donnée, suivant la vitesse de rotation d'entrée (ne(t)), la variation commençant lorsqu'est atteinte une vitesse de rotation d'entrée (nemin) donnée et se terminant lorsqu'est atteinte une valeur limite donnée du rapport.

7. Dispositif de commande selon la revendication 6, caractérisé en ce que la fonction de réglage du rapport est choisie en fonction de la vitesse de rotation d'entrée (ne(t)), de manière que la vitesse de rotation d'entrée atteigne une valeur limite (nemax') lorsqu'est atteinte la valeur limité donnée du rapport (uesoll_1).

8. Procédé de commande d'une transmission (2) à variation continue d'un véhicule automobile, entraîné en particulier au moyen d'un moteur à combustion interne (4), un dispositif de commande (6), exécutant le procédé de commande, étant pourvu d'un dispositif de sélection (18) et le dispositif de commande (6) simulant une transmission étagée, en ce que le dispositif (6) règle dans la transmission des rapports (uesoll_i) sélectionnés parmi un groupe de rapports (uesoll_i) préréglés, caractérisé par les étapes suivantes:
- reconnaissance d'une situation de marche à basse vitesse, et ensuite
- adaptation du rapport (uesoll_1) préréglé maximal dans le sens d'une réduction du rapport.

9. Procédé de commande selon la revendication 8, caractérisé par les étapes suivantes d'une reconnaissance d'une situation de marche à basse vitesse:
- vérification que la position d'un organe de commande de puissance (alpha(t)) pour un moteur d'entraînement (4), relié à la transmission (2), se situe au-dessous d'une valeur limite (G1),
- vérification qu'une vitesse de réglage de la position de l'organe de commande de puissance (dalpha(t)/dt) se situe au-dessous d'une valeur limite (G2) et
- reconnaissance de la situation de marche à basse vitesse, lorsque toutes les conditions sont réunies simultanément.

10. Procédé de commande selon la revendication 8, caractérisé par les étapes suivantes de reconnaissance d'une situation de marche à basse vitesse:
- vérification que la vitesse du véhicule (v(t)) se situe au-dessous d'une valeur limite,
- vérification qu'une vitesse de réglage de la position de l'organe de commande de puissance (dalpha(t)/dt) se situe au-dessous d'une valeur limite (G2) et
- reconnaissance de la situation de marche à basse vitesse, lorsque toutes les conditions sont réunies simultanément.

11. Procédé de commande selon la revendication 9 ou 10, caractérisé par l'étape préalable à la reconnaissance d'une situation de marche à basse vitesse:
- vérification qu'on est en présence d'un démarrage.

12. Procédé de commande selon l'une des revendications 8 à 11, caractérisé par les étapes suivantes d'adaptation du rapport (uesoll_1) préréglé maximal:
- attente jusqu'à ce que la vitesse de rotation d'entrée (ne(t)) de la transmission (2) atteigne une valeur de consigne (nesoll) donnée,
- réglage du rapport (uesoll_v) de manière que la vitesse de rotation d'entrée reste sensiblement constante,
- suppression du réglage lorsque le rapport (ue) atteint une valeur limite donnée.

13. Procédé de commande selon l'une des revendications 8 à 11, caractérisé par les étapes suivantes d'adaptation du rapport (uesoll_1) préréglé maximal:
- attente jusqu'à ce que la vitesse de rotation d'entrée (ne(t)) de la transmission (2) atteigne une valeur minimale (nemin) donnée,
- réglage d'un rapport (uesoll_v) modifié selon une fonction donnée, suivant la vitesse de rotation d'entrée (ne(t)),
- suppression du réglage lorsque le rapport (ue) atteint une valeur limite donnée.

14. Procédé de commande selon la revendication 13, caractérisé en ce que la fonction de réglage du rapport (uesoll_v) modifié est choisie en fonction de la vitesse de rotation d'entrée, de manière que la vitesse de rotation d'entrée (ne(t)) atteigne une valeur limite (memax') donnée, lorsqu'est atteinte la valeur limité donnée du rapport.
